Europäisches Patentamt

European Patent Office

Office européen des brevets

(19)

(11) Numéro de publication: **0 032 097 B1**

(12) **FASCICULE DE BREVET EUROPEEN**

(45) Date de publication du fascicule du brevet:
24.10.84

(51) Int. Cl.³: **C 04 B 35/56, C 01 B 31/36, D 01 F 9/08, C 04 B 35/80**

(21) Numéro de dépôt: **80401873.7**

(22) Date de dépôt: **26.12.80**

(54) **Procédé de fabrication d'une structure en carbure de silicium.**

(30) Priorité: **02.01.80 FR 8000030**

(43) Date de publication de la demande:
**15.07.81 Bulletin 81/28**

(45) Mention de la délivrance du brevet:
**24.10.84 Bulletin 84/43**

(84) Etats contractants désignés:
**DE GB IT SE**

(56) Documents cités:
**DE - A - 2 500 082**
**FR - A - 2 189 207**
**FR - A - 2 227 244**
**FR - A - 2 276 916**
**GB - A - 866 818**
**GB - A - 998 089**
**GB - A - 1 457 757**
**US - A - 3 462 340**
**US - A - 3 927 181**
**US - A - 4 162 301**

(73) Titulaire: **SOCIETE EUROPEENNE DE PROPULSION (S.E.P.) Société Anonyme dite:, 3, avenue du Général de Gaulle, F-92800 Puteaux (FR)**

(72) Inventeur: **Vallet, André Michel, "Le Fontenoy" Lot No 1, F-33160 Saint-Aubin (FR)**

(74) Mandataire: **Joly, Jean-Jacques, CABINET BEAU DE LOMENIE 55, rue d'Amsterdam, F-75008 Paris (FR)**

ACTORUM AG

## Description

La présente invention a notamment pour objet un procédé de fabrication d'une structure en carbure de silicium à partir d'une structure de carbone.

Le terme «structure» désigne ici aussi bien un élément unidirectionnel, c'est-à-dire un élément filiforme tel que fibre, fil, tige, etc., qu'une texture multidirectionnelle, c'est-à-dire un ensemble d'éléments filiformes disposés suivant plusieurs directions dans un plan: tissu, feutre, etc., ou dans l'espace: texture tridimensionnelle.

A l'heure actuelle, on connaît plusieurs procédés de fabrication de structures en carbure de silicium.

Pour fabriquer des fibres en carbure de silicium, il a été proposé de filer des composés organosilicés de poids moléculaire élevé puis de cuire les fibres filées. Il a aussi été proposé de former un dépôt en phase vapeur de carbure de silicium sur un support en carbone ou en tungstène. Par ailleurs, il est suggéré dans le brevet U.S. 4 162 301 de faire réagir des fibres en polymère organique avec du tétrachlorure de silicium avant traitement thermique en vue d'obtenir des fibres en carbure de silicium et carbone.

L'inconvénient de ces procédés réside dans le fait que leur application est limitée à la fabrication d'éléments unidirectionnels rigides de très faible diamètre. La fragilité de ces éléments interdit leur utilisation pour fabriquer des textures bi ou tridimensionnelles en carbure de silicium.

Il est bien envisagé, dans le brevet U.S. 4 162 301 de procéder comme avec les fibres à partir d'un tissu. Là encore, on peut s'attendre à ce que le produit obtenu présente une trop grande fragilité pour permettre la réalisation de structures ayant un comportement mécanique satisfaisant.

Il a bien été proposé de produire un matériau contenant du carbure de silicium par immersion d'une texture de carbone ou d'un matériau composite carbone-carbone dans un bain de silicium en fusion. La texture en carbone est imprégnée par le silicium liquide par phénomène de capillarité et le carbure de silicium est produit par réaction du silicium liquide avec le carbone. Avec ce procédé connu, il s'avère que l'on obtient un matériau composite de type, Si-SiC dans lequel le silicium libre est présent de façon inévitable et joue le rôle de matrice. La présence de silicium libre dont le point de fusion est à 1410 °C limite considérablement les possibilités d'utilisation du matériau obtenu car ces caractéristiques mécaniques sont très fortement affectées à partir de 1400 °C.

Il est connu par ailleurs du brevet GB 998.089 de plonger un tissu en carbone dans de la poudre de silicium puis de soumettre le tissu revêtu de poudre à un traitement thermique pour obtenir un tissu en carbure de silicium. Avec ce procédé, on ne peut guère contrôler la quantité de silicium déposé sur le tissu et il est pratiquement impossible de réaliser un dépôt uniforme. De plus, le tissu revêtu de poudre de silicium ne peut pas être manipulé sans faire tomber la poudre de silicium. Par ailleurs, il est indiqué dans le brevet GB 998.089 que le silicium est en excès par rapport à la proportion stoechiométrique nécessaire; il s'ensuit la présence de silicium libre dans le tissu en carbure de silicium.

Suivant encore un autre procédé décrit dans le brevet U.S. 3 927 181, des micro-ballons en carbone sont immergés dans un bain contenant une solution aqueuse d'alginate de sodium, un polymère d'acide acrylique dissous dans de l'acétone et de la poudre de silicium en suspension. Les micro-ballons sont ensuite égouttés, séchés; plusieurs séquences trempage – égouttage – séchage – peuvent être réalisées. Les micro-ballons séchés revêtus de poudre de silicium sont soumis à un traitement thermique pour obtenir des micro-ballons en carbure de silicium. Ce procédé connu ne semble pas plus à même que le précédent d'obtenir un revêtement d'une quantité donnée de poudre de silicium, et de disposer de produits revêtus de poudre de silicium qui soient manipulables sans risque d'altération du revêtement de silicium.

La présente invention a pour but de fournir un procédé de fabrication d'une structure en carbure de silicium, à partir d'une structure en carbone, procédé qui puisse être mis en œuvre aussi bien sur des éléments unidirectionnels que sur des textures multidirectionnelles et qui permette l'obtention de structures en carbone qui, revêtues de silicium, sont facilement manipulables et stockables sans risquer de dégrader le revêtement de silicium.

La présente invention a aussi pour but de permettre de réaliser un revêtement uniforme de la structure en carbone par le silicium, de contrôler facilement la quantité de silicium revêtant la structure en carbone, et de garantir l'absence de silicium libre dans la structure de silicium.

Ces buts sont atteints par un procédé selon lequel, conformément à l'invention:

– l'on part d'une structure en carbone formée par un élément unidirectionnel ou par un assemblage d'éléments filiformes disposés suivant plusieurs directions d'un plan ou de l'espace,

– l'on immerge la structure en carbone dans un bain contenant: 10 à 30% en poids d'une résine dite fugitive ne laissant, lors du chauffage en vue du traitement thermique, aucun résidu capable de réagir avec le silicium ou de subsister sur la structure de carbone, et 20 à 40% en poids de poudre de silicium, le reste étant un solvant de la résine,

– l'on élimine le solvant de manière à obtenir une structure de carbone qui est revêtue de résine et de poudre de silicium prise dans la résine de sorte que cette structure peut être manipulée sans dégradation du revêtement de silicium, et

– l'on réalise le traitement thermique à une température supérieure au point de fusion du silicium.

La composition du bain d'imprégnation permet d'amener la poudre de silicium uniformément sur toute la surface de la structure de carbone. De plus, en faisant varier cette composition et/ou en réglant le temps de séjour de la structure dans le bain, on peut contrôler la quantité de silicium déposé et, partant le taux de transformation du carbone en carbure de silicium. En particulier, on peut éviter la présence de silicium libre dans la structure obtenue après traitement thermique.

Par ailleurs, après séchage, le silicium est «fixé» sur la structure par la résine. La structure peut alors, sans risque de perte de silicium, être manipulée ou être stockée même pour une longue période. En particulier, la structure peut être utilisée pour réaliser une mise en forme, en fonction de la pièce à fabriquer, avant le traitement thermique de transformation en carbure de silicium.

La texture multidirectionnelle en carbure de silicium et carbone obtenue selon le procédé de l'invention peut être un tissu ou une texture tridimensionnelle formée de faisceaux entrecroisés d'éléments filiformes. Dans ce dernier cas, elle peut servir de base à la fabrication d'un matériau composite par adjonction d'une matrice remplissant les espaces libres à l'intérieur de la structure. La matrice est de préférence un matériau réfractaire, par exemple du carbure de silicium mis en place par un procédé de dépôt en phase vapeur; le matériau obtenu est alors un composite SiC-SiC.

Pour la mise en œuvre du procédé conforme à l'invention, et comme indiqué plus haut, on utilise un mélange d'imprégnation comportant une résine fugitive chargée de poudre de silicium et diluée dans un solvant.

Par résine fugitive, on entend ici une résine ayant un taux de coke nul, c'est-à-dire ne laissant aucun résidu capable de réagir avec le silicium lors du traitement thermique ou de subsister sur la structure de carbone.

A titre d'exemple, la résine fugitive choisie est un alcool polyvinylique ou un polyméthacrylate. Ces résines sont des produits bien connus en soi et les solvants utilisés sont choisis parmi les solvants usuels connus de ces résines, par exemple l'eau ou un alcool pour les alcools polyvinyliques.

La composition du mélange d'imprégnation est choisie de manière à assurer un bon «mouillage» de la structure de carbone par le silicium. Par ailleurs, la viscosité du mélange doit être suffisante pour maintenir en suspension la poudre de silicium pendant un temps suffisant pour mettre en œuvre le procédé, par exemple plusieurs heures. Enfin, la quantité de poudre de silicium est choisie suffisante mais limitée pour obtenir une texture finale constituée essentiellement du carbure de silicium, mais sans silicium libre, le pourcentage de carbone résiduel pouvant être prédéterminé en choisissant la proportion de poudre de silicium dans le mélange d'imprégnation.

La poudre de silicium est choisie avec une granulométrie telle qu'elle constitue une suspension durable: la taille des particules de silicium est inférieure, de préférence, à 40 μm.

L'imprégnation de la structure de carbone est réalisée par passage de celle-ci à température ambiante dans le bain constitué par le mélange d'imprégnation. S'agissant d'une structure filiforme ou en forme de bande, ce passage est réalisé en faisant défiler la structure en continu dans le bain.

Après le stade d'imprégnation, le solvant est éliminé par séchage à chaud, par exemple par passage dans un four. On obtient alors une structure imprégnée rigide manipulable.

La structure imprégnée peut être mise en forme, avant le traitement thermique final de transformation en carbure de silicium, en fonction de la pièce à fabriquer. Par exemple, partant d'un tissu de carbone, celui-ci est imprégné, séché, puis découpé en strates suivant des formes et dimensions désirées afin de réaliser la pièce voulue par empilage des strates et traitement thermique de l'empilement. De la même manière, partant d'un élément filiforme de carbone, celui-ci est imprégné et séché pour obtenir des baguettes qui sont assemblées pour former la texture multidirectionnelle désirée avant le traitement thermique final. Bien entendu, il est également possible de partir d'une structure de carbone ayant déjà la forme de la structure de carbure de silicium à fabriquer.

Le traitement thermique final est réalisé sous atmosphère neutre, à une température supérieure au point de fusion du silicium et pendant une durée suffisante pour que le silicium fonde et se combine complètement avec le carbone.

A titre indicatif, on peut choisir une température comprise entre 1 450 et 1 800 °C, une atmosphère neutre d'argon ou d'azote à la pression atmosphérique et une durée de traitement comprise entre 2 et 60 minutes. Le choix de température et durée supérieures aux limites maximales indiquées n'apporte pas d'amélioration notable du résultat au regard des augmentations de la difficulté, du temps et du coût du traitement qui en résultent.

Au cours du traitement thermique, on observe successivement l'élimination totale de la résine fugitive, la fusion de la poudre de silicium et la réaction du silicium liquide avec le carbone pour donner le carbure de silicium.

Le matériau obtenu par le procédé conforme à l'invention se caractérise par une proportion en poids de carbure de silicium au moins égale à 60%, d'où une excellente tenue à l'oxydation. En outre, sous forme d'un empilement de strates de tissu ou de texture multidirectionnelle formée par l'entrecroisement de baguettes, le matériau obtenu par le procédé conforme à l'invention se révèle apte à subir toute méthode usuelle de densification pour obtenir un matériau composite réfractaire à haute tenue mécanique.

Des modes particuliers de mise en œuvre du procédé conforme à l'invention sont décrits de façon détaillée dans les exemples donnés ci-après.

On se référera aux dessins annexés sur lesquels:

les fig. 1A et 1B sont deux vues très schématiques illustrant la mise en œuvre du procédé conforme à l'invention sur un tissu de carbone; et

la fig. 2 est une vue illustrant une partie de la mise en œuvre du procédé conforme à l'invention sur un fil de carbone.

Le procédé conforme à l'invention est mis en œuvre sur une structure constituée par un élément filiforme, par exemple un fil de carbone, ou par un tissu de carbone ou de graphite ou par une texture multidirectionnelle formée par un entretoisement de fils ou baguettes de carbone de différentes directions.

Les fils ou tissus de carbone sont, de façon connue, issus de précurseurs tels que rayonne, polyacrylonitriles, coton, brai, etc. Les tissus peuvent présenter divers types d'armure: unidirectionnel, satin, toile, etc., avoir une contexture très diversifiée: nombre de mailles au cm, épaisseur, poids au m², etc., et être formés de fils continus ou discontinus. Les fils peuvent présenter un nombre quelconque de filaments continus ou discontinus, ce nombre étant choisi en fonction du diamètre de fil en carbure de silicium à réaliser.

Différentes mises en œuvre du procédé conforme à l'invention ont été réalisées et sont décrites dans les exemples ci-après.

Exemple 1

Un tissu de graphite à tissage toile issu d'un précurseur rayonne est imprégné par passage dans un bain comportant, en poids, 20% de résine fugitive, 30% de poudre de silicium et 50% de solvant.

La résine fugitive utilisée est un alcool polyvinylique et le solvant de l'eau. La poudre de silicium est formée de particules de dimensions moyennes égales environ à 40 µm.

On remarque que le bain présente une viscosité suffisante pour maintenir en suspension la poudre de silicium pendant plusieurs heures. En outre, ce bain assure un très bon mouillage du tissu par la résine chargée en poudre de silicium.

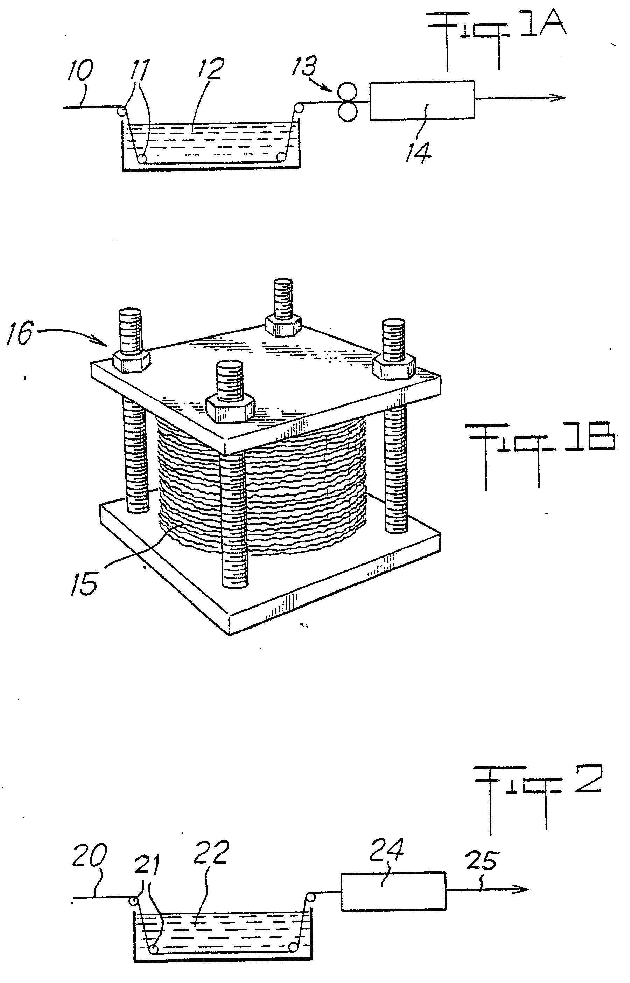

Comme illustré par la fig. 1A, le tissu se présente sous forme d'une bande 10 qui est déplacée en continu en étant guidée par des rouleaux 11 à l'intérieur d'une cuve 12 contenant le bain d'imprégnation à température ambiante. En sortie, de la cuve 12, la bande de tissu 10 est essorée en 13 pour exprimer le mélange d'imprégnation en excès puis passe à travers un four tunnel 14 pour éliminer le solvant par évaporation à chaud. En sortie du four 14, on obtient un tissu sec, rigide et facilement manipulable qui est constitué par le tissu de graphite à raison de 30% en poids, la poudre de silicium à raison de 45% en poids et la résine fugitive à raison de 25% en poids.

Pour obtenir un tissu en carbure de silicium, on soumet le tissu imprégné à un traitement thermique dans un four sous atmosphère d'argon, à une pression équivalente à 760 mm de mercure (101,3 kPa), à une température de 1 600 °C et pendant une durée de 15 minutes.

A la fin de ce traitement thermique, on observe une diminution de poids de 25% correspondant à l'élimination de la résine fugitive et la transformation du tissu de graphite en tissu de carbure de silicium.

Le tissu obtenu est rigide et très facilement manipulable. L'analyse montre qu'il est constitué de carbure de silicium cristallisé à raison de 82% en poids et de carbone libre à raison de 18% en poids. Il ne subsiste pas de silicium libre. On notera que le pourcentage de carbone résiduel peut être modifié par changement de la composition du bain d'imprégnation.

L'examen au microscope électronique fait apparaître que le tissu de carbure de silicium conserve la texture du tissu de graphite d'origine. On retrouve même la forme originelle de la fibre du tissu de graphite.

Le tissu obtenu a été exposé à l'air pendant 17 heures à une température de 1 000 °C. Une perte de poids égale à 15% du poids initial du tissu de carbure de silicium a été observée, sans désagrégation du tissu. A titre de comparaison, le tissu de graphite originel disparaît complètement après une exposition à l'air à 1 000 °C pendant 30 minutes seulement.

Exemple 2

On procède comme dans l'exemple 1 jusqu'à l'obtention du tissu revêtu de silicium et de résine, après élimination du solvant et avant traitement thermique final.

Des strates sont découpées dans ce tissu et empilées conformément à la forme d'une pièce à réaliser.

L'empilement de strates 15 est immobilisé dans un outillage 16 (fig. 1B) dans lequel il est maintenu pendant la durée d'un traitement thermique analogue à celui décrit dans l'exemple 1 et assurant la transformation en tissu de carbure de silicium.

La texture obtenue a la même constitution que le tissu obtenu dans l'exemple 1.

Cette texture peut être densifiée par introduction d'une matrice dans les espaces libres entre les fibres de tissu des différentes strates.

Pour ce faire, la texture maintenue dans son outillage est introduite par exemple dans un four d'infiltration de pyrocarbone de manière à réaliser, de façon connue en soi, un dépôt de carbone pyrolytique en phase vapeur au sein de la texture. On obtient alors un matériau composite C-SiC. Le tissu SiC garde pratiquement toute son intégrité au sein de ce matériau même après sollicitation mécanique. En effet, une oxydation à 1 000 °C du matériau composite après test mécanique a permis l'élimination totale du pyrocarbone et la récupération quasi intégrale du tissu de carbure de silicium.

La même technique de densification par dépôt en phase vapeur a permis de déposer une matrice de carbure de silicium en phase vapeur au sein d'une texture formée par l'empilement de strates de tissu de carbure de silicium, de manière à obtenir un matériau composite SiC-SiC.

Exemple 3

Un fil de carbone 20 (fig. 2) à précurseur polyacrylonitrile, guidé par des cylindres 21, est imprégné par passage en continu dans une cuve 22 contenant un bain d'imprégnation identique à celui indiqué dans l'exemple 1.

En sortie du bain, le solvant est éliminé par la chaleur au cours du passage dans une filière 24 qui permet d'obtenir une baguette 25 calibrée, rigide, non cassante et facilement manipulable.

Plusieurs baguettes de diamètres allant de 0,4 mm à 3 mm ont pu ainsi être obtenues.

Les baguettes obtenues sont soumises à un traitement thermique dans les conditions indiquées dans l'exemple 1 et l'on obtient un fil de carbure de silicium rigide et manipulable.

Une baguette constituée, en poids, de 55% de fil de carbone, de 25% de poudre de silicium et de 20% de résine fugitive a permis d'obtenir un fil de carbure de silicium contenant 97% en poids de carbure de silicium cristallisé, le reste étant du carbone libre à l'exclusion de silicium libre. Ce fil exposé à l'air pendant 17 heures à 1 000 °C ne s'est pas désagrégé, la perte de poids enregistrée étant seulement de 1%.

Exemple 4

Un fil de carbone de diamètre 1 mm, et précurseur polyacrylonitrile, est imprégné par passage dans un bain contenant, en poids, 60% de solvant, 30% de poudre de silicium et 10% de résine fugitive.

Après élimination du solvant, on produit en sortie de la filière des baguettes de 1 mm de diamètre dont les proportions en poids des constituants sont: 55% pour le fil de carbone, 35% pour la poudre de silicium et 10% pour la résine fugitive.

Les baguettes obtenues sont rigides et très facilement manipulables sans être cassées.

On utilise ces baguettes pour construire un bloc de texture multidirectionnelle de type 4-D tel que décrit dans le brevet français n° 2 276 916. Dans le bloc obtenu, les baguettes forment quatre faisceaux entrecroisés de baguettes parallèles entre elles dans chaque faisceau, les quatre directions des faisceaux étant orientées suivant les quatre grandes diagonales d'un cube. Les dimensions du bloc fabriqué sont 50 mm × 50 mm × 100 mm.

Le bloc formé avec les baguettes est soumis à un traitement thermique dans les conditions indiquées dans l'exemple 1 pour produire successivement l'élimination de la résine fugitive, la fusion de la poudre de silicium et la réaction du silicium liquide avec le carbone. Au cours de ce traitement, la texture du bloc 4-D ne subit pas de modification et l'on n'observe ni gonflement ou déplacement de baguettes, ni éclatement des fibres de carbone.

L'analyse du bloc obtenu montre qu'il est constitué pour 60% en poids par du carbure de silicium et pour 40% en poids de carbone libre résiduel. Il est à noter que le pourcentage relativement élevé du carbone résiduel est dû à la composition particulière du bain d'imprégnation, la proportion de résine étant plus faible que dans les exemples précédents. Comme déjà indiqué, la quantité de carbone libre résiduel dans le produit final peut être en effet ajustée par le choix de la composition du bain d'imprégnation.

La texture 4-D obtenue est exposée à l'air pendant 17 heures à une température de 1 000 °C. Bien que l'on enregistre une perte de poids de 35%, due au carbone résiduel, la texture ne se désagrège pas. Par contre, un bloc 4-D réalisé uniquement en carbone disparaît complètement quand il est soumis aux mêmes conditions.

La texture 4-D au carbure de silicium peut être utilisée comme texture de renfort au sein d'un matériau composite obtenu par dépôt d'une matrice dans les espaces laissés libres entre les éléments de la texture. On peut notamment utiliser les techniques connues de densification par dépôt en phase vapeur pour déposer du carbure de silicium et obtenir ainsi un matériau composite SiC-SiC. On pourrait également utiliser les techniques connues d'imprégnation de la texture par voie liquide pour mettre en place une matrice en alumine, en zircone, ou en carbure de silicium par exemple.

L'invention permet donc de réaliser des matériaux composites (tissus ou textures tridimensionnelles densifiés) qui allient les propriétés réfractaires des constituants à la bonne tenue mécanique procurée par la texture du matériau.

## Revendications

1. Procédé de fabrication d'une structure en carbure de silicium, comportant les étapes d'immersion d'une structure de carbone dans un bain contenant de la poudre de silicium en suspension dans un véhicule liquide qui comprend une résine et un solvant de cette résine, séchage pour obtenir une structure de carbone revêtue de résine et silicium, et traitement thermique pour faire réagir le silicium avec le carbone et obtenir la structure de carbure de silicium, caractérisé en ce que:

— l'on part d'une structure en carbone formée par un élément unidirectionnel ou par un assemblage d'éléments filiformes disposés suivant plusieurs directions d'un plan ou de l'espace,

— l'on immerge la structure en carbone dans un bain contenant: 10 à 30% en poids de résine dite fugitive ne laissant, lors du chauffage en vue du traitement thermique, aucun résidu capable de réagir avec le silicium ou de subsister sur la structure de carbone, et 20 à 40% en poids de poudre de silicium, le reste étant un solvant de la résine,

— l'on élimine le solvant de manière à obtenir une structure de carbone qui est revêtue de résine et de poudre de silicium prise dans la résine de sorte que cette structure peut être manipulée sans dégradation du revêtement de silicium, et

— l'on réalise le traitement thermique à une température supérieure au point de fusion du silicium.

2. Procédé selon la revendication 1, caractérisé en ce que l'on utilise la structure de carbone revêtue de silicium et de résine, après élimination du solvant, pour réaliser un assemblage fonction de la forme de la structure en carbure de silicium à obtenir, et l'on soumet ensuite l'assemblage audit traitement thermique.

3. Procédé selon la revendication 2, caractérisé en ce que l'on utilise une structure en carbone constituée comme connu en soi par un tissu et l'on empile des strates de tissus revêtus de résine et poudre de silicium prise dans la résine avant de soumettre l'empilement au traitement thermique.

4. Procédé selon la revendication 2, caractérisé en ce que l'on utilise une structure en carbone constituée comme connu en soi par un fil, on forme des baguettes à partir du fil revêtu de résine et poudre de silicium prise dans la résine, et on assemble les baguettes pour former une structure dite multidirectionnelle constituée par un assemblage de baguettes orientées suivant différentes directions de l'espace, avant de soumettre la structure multidirectionnelle au traitement thermique.

**Claims**

1. Process for producing a silicon carbide structure, comprising the stages of: immersing the carbon structure into a bath containing silicon powder in suspension in a liquid medium comprising a resin and a solvent of said resin, drying in order to obtain a carbon structure coated with resin and silicon, and heat treatment to let the silicon react with the carbon and to obtain the silicon carbide structure, characterized in that:
   - a carbon structure formed by an unidirectional texture, or by a structure assembly of filiform elements arranged according to several directions of a plane or of space is used,
   - the carbon structure is immersed in a bath containing 10 to 30% by weight of fugitive resin which leaves during the heating phase for the heat treatment no residual liable to react with silicon or to remain on the carbon structure, and 20 to 40% by weight of silicon powder, the remainder being constituted by a solvent of the resin,
   - the solvent is eliminated to obtain a carbon structure which is coated with resin and silicon powder bonded in the resin so that this structure can be handled without deterioration of the silicon coating, and
   - the heat treatment is carried out at a temperature superior to the melting point of silicon.

2. Process according to claim 1, characterized in that the carbon structure coated with silicon and resin is used, after removal of the solvent to produce an assembly which depends on the shape of the silicon carbide structure to be obtained, and the assembly is then subjected to said heat treatment.

3. Process according to claim 2, characterized in that a carbon structure formed in manner known per se, by a material, is used and layers of material coated with resin and silicon powder bonded in the resin are stacked before subjecting the stack to the heat treatment.

4. Process according to claim 2, characterized in that a carbon structure constituted as known per se, by a filament, is used, rods are formed from the filament coated with resin and silicon powder bonded in the resin, and the rods are assembled to obtain a so-called multi-directional texture constituted by an assembly of rods orientated according to different directions of space, before subjecting the multidirectional structure to heat treatment.

**Patentansprüche**

1. Verfahren zum Herstellen eines Bauelements aus Siliziumkarbid mit den Schritten eines Eintauchens eines Kohlenstoffbauelements in ein Bad, das Siliziumpulver in einem flüssigen Träger enthält, der ein Harz und ein Lösungsmittel dieses Harzes aufweist, eines Trocknens zum Erhalten eines mit Harz und Silizium überzogenen Kohlenstoffbauelements und einer Wärmebehandlung zum Reagierenlassen des Siliziums mit dem Kohlenstoff und Erhaltens des Bauelements aus Siliziumkarbid, dadurch gekennzeichnet, dass man
   - von einem Kohlenstoffbauelement ausgeht, das aus einem einsinnig gerichteten Element oder aus einer Ansammlung von fadenförmigen, längs mehrerer Richtungen einer Ebene oder des Raumes angeordneter Elemente gebildet ist,
   - das Kohlenstoffbauelement in ein Bad eintaucht, das 10 bis 30 Gewichtsprozent sogenannten flüchtigen Harzes, das beim Erhitzen zwecks der Wärmebehandlung keinen Rückstand übriglässt, der zum Reagieren mit dem Silizium oder zum Bleiben auf dem Kohlenstoffbauelement geeignet ist, und 20 bis 40 Gewichtsprozent Siliziumpulver enthält, wobei der Rest ein Lösungsmittel des Harzes ist,
   - das Lösungsmittel entfernt, so dass man ein Kohlenstoffbauelement erhält, das mit Harz und im Harz festgelegten Siliziumpulver derart überzogen ist, dass dieses Bauelement ohne Verschlechterung des Siliziumüberzugs gehandhabt werden kann, und
   - die Wärmebehandlung bei einer Temperatur über dem Schmelzpunkt des Siliziums durchführt.

2. Verfahren nach Anspruch 1, dadurch gekennzeichnet, dass man das mit Silizium und Harz überzogene Kohlenstoffbauelement nach Entfernung des Lösungsmittels verwendet, um eine Ansammlung als Funktion der Form des herzustellenden Bauelements aus Siliziumkarbid zu erzeugen, und anschliessend die Ansammlung der Wärmebehandlung unterwirft.

3. Verfahren nach Anspruch 2, dadurch gekennzeichnet, dass man ein Kohlenstoffbauelement verwendet, das, wie an sich bekannt, aus einem Gewebe besteht, und mit Harz und im Harz festgelegtem Siliziumpulver überzogene Gewebelagen stapelt, bevor man den Stapel der Wärmebehandlung unterwirft.

4. Verfahren nach Anspruch 2, dadurch gekennzeichnet, dass man ein Kohlenstoffbauelement verwendet, das, wie an sich bekannt, aus einem Faden besteht, aus dem mit Harz und im Harz festgelegten Siliziumpulver überzogenen Faden Stäbe bildet und die Stäbe vereint, um ein sogenanntes vielfach gerichtetes Bauelement zu erzeugen, das aus einer Ansammlung von längs verschiedenen Richtungen des Raumes ausgerichteten Stäben gebildet ist, bevor man das vielfach gerichtete Bauelement der Wärmebehandlung unterwirft.

Fig. 1A

Fig. 1B

Fig. 2